# EUROPEAN PATENT SPECIFICATION

(11) **EP 2 009 849 B1**
(45) Date of publication and mention of the grant of the patent: **25.08.2010**
(21) Application number: 07290808.0
(22) Date of filing: 29.06.2007
(51) Int. Cl.: H04L 12/56

(54) **Packet switch for a network element of a telecommunications network**
Paketvermittlungseinrichtung für ein Netzwerkelement eines Telekommunikationsnetzwerks
Commutateur de paquet pour élément de réseau d'un réseau de télécommunications

(43) Date of publication of application: 31.12.2008
(73) Proprietor: Alcatel Lucent, 75008 Paris (FR)
(72) Inventor: Gemelli, Riccardo, 20019 Settimo M. se (MI) (IT); Costantini, Carlo, 22064 Casatenovo (Lecco) (IT); Ronchetti, Luigi, 22100 Como (IT); Cucchi, Silvio, 20083 Gaggiano (MI) (IT)
(74) Representative: Urlichs, Stefan

(56) References cited:
- EP-A- 1 521 411
- EP-A- 1 549 103
- US-A1- 2005 135 356

## Description

### FIELD OF THE INVENTION

The present invention relates to the field of telecommunication networks. More in particular, the invention concerns a method for controlling the switching of data packets through a network element.

### BACKGROUND OF THE INVENTION

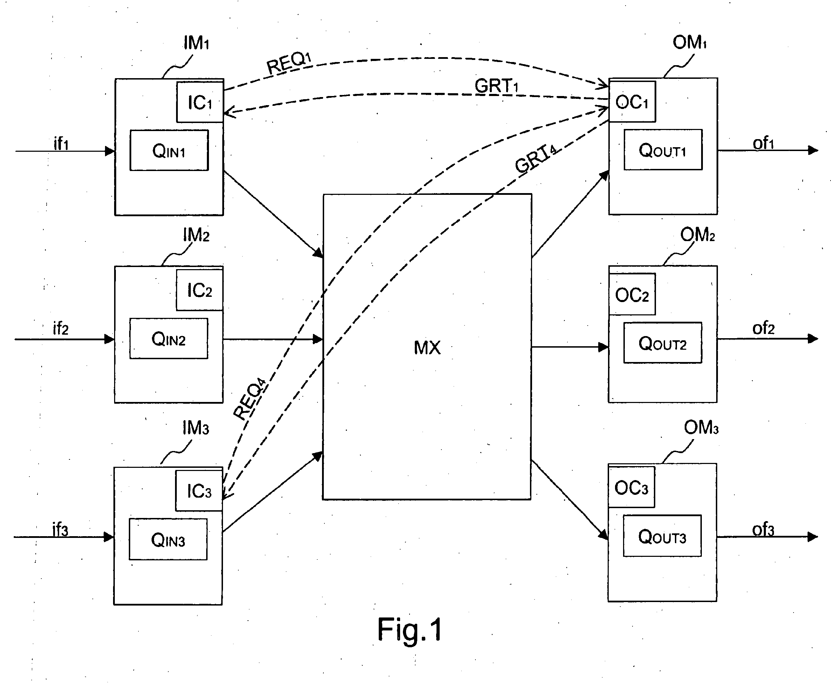

Referring to Fig.1, a known network element comprises a plurality of input modules (IM₁, IM₂, IM₃) for receiving data packets from a plurality of input flows (if1, if2, if3), a plurality of output modules (OM₁, OM2, OM3) for transmitting data packets to a plurality of output flows (of1, of2, of3) and a switching matrix (MX) connected to the input modules and to the output modules for switching the received data packets from the plurality of input modules to the plurality of output modules. The input modules comprise input queues (QIN₁, QIN2, QIN3) for storing the received data packets. Fig.1 shows one output flow for each output module (of 1 for OM₁, of2 for OM₂, of3 for OM3), but one (or more) output module can include more than one output flows (for example, OM1 includes output flows of11, of12, of13). The multiple output flows of an output module can be physical flows (multiple transmitters) or logical flows (time or wavelength division, sharing the same physical flow). The same applies to the input modules, which can include a plurality of input flows.

Hereinafter, the term "packet" indicates a data set including a payload field and an header field according to a pre-defined format and having a fixed or variable size. Specifically, the payload field carries user information and the header field carries auxiliary information; for example, the header field includes an address indicating of the packet destination or a label in case of pre-defined paths in the network. The most common packets formats are IP (Internet Protocol), MPLS (Multi-Protocol Label Switching) and Ethernet (having a variable size) and ATM (Asynchronous Transfer Mode, having a fixed size).

It is known in the field of telecommunication networks an architecture for switching the data packets, indicated with "arbitrated" packet switch. An arbitrated packet switch further comprises a plurality of input controllers and a central controller (not shown in Fig. 1). An input controller controls the switching from an input module to an output module, wherein the input module includes an input queue for storing the data packet received from an input flow and the central controller is responsible for selecting from the input modules the quantity of data and from which input queue is allowed to be switched.

An arbitrated packet switch performs the switching according to a scheduling algorithm based on request and grant messages. Each input controller calculate from the status of the input queue storing the received data packets a first quantity of the data packets to be switched from the input module to the output module and afterwards the input controller transmits to the central controller a request message including the first quantity. The quantity of the data packets stored into an input queue is measured as the number of bits/ bytes of the packets or (in case the packets have a fixed size) the number of packets; alternatively, the packets are divided into cells of fixed size and the quantity of the data packets stored into an input queue is measured as the number of cells. The central controller receives the request messages from all the input controllers, calculates first allowed quantities to at least part of the first requested quantities and transmits to the input controllers grant messages including the first allowed quantities. Finally, the input module transmits to the output module the data packets stored in the input queues, according to the value of the first allowed quantity.

European patent application EP1549103 discloses that the transmission of data between the input modules and the output modules occurs in successive switching cycles of a constant duration and, preferably, that each input and output module transmits and receives a quantity of data simultaneously with each switching cycle.

European patent application EP1770927 discloses a distributed arbitrated packet switch, further including a plurality of output controllers for controlling the switching by exchanging messages with the plurality of input controllers. A distributed packet switch performs the switching according to a different distributed request-grant mechanism. Specifically, an input controller calculates from the status of the input queues storing the received data packets a first quantity of data packets to be switched from the input module to the output module and afterwards the input controller transmits to the output controller a request message including the first quantity. The output controller receives the request message, calculates a first allowed quantity to at least part of the first requested quantity and transmits to the central controller a grant message including the first allowed quantity. The central controller is able to modify the first allowed quantity of the grant message received from the input controller, receives the grant messages from all the output controllers and transmits to the input controllers other grant messages including the modified allowed quantities. After receiving the grant message from the central controller, the input module transmits to the output module the data packets stored in the input queues, according to the value modified allowed quantity.

The latency of a packet switch is defined as the time required for switching the data packets from the input modules to the output modules; this is an important value which must be as small as possible and depends for example on the time required for processing the data packets and on the amount of data packets processed by the packet switch.

According to the above request-grant scheduling algorithm, some time is required between the transmission of a request message and the reception of a corresponding grant message and thus a delay (indicated with "scheduling latency") is added for switching the data packets from the input module to the output module, thus increasing the latency of the packet switch to a value which can't be accepted.

For example, the latency is increased in case of receiving the data packets at a high bit rate or in case of a sharp change of the rate of the received data packets, wherein sharp means that the time between the reception of different data packets is smaller than the scheduling latency. In both cases, the size of the input queues increases and thus also the latency increases; in the worst case, overflow in the input queues can occur, that is the size of the input queues can't be sufficient for storing all the received data packets and a part thereof is lost.

Therefore the technical problem to be solved is to reduce the scheduling latency.

A possible solution to the above technical problem is to design a faster scheduling algorithm, wherein the grant messages are received after a smaller time unit. For example, European patent application EP1791306 discloses an improved algorithm performed by the central controller able to operate in parallel, thus reducing the scheduling latency. This algorithm (or other similar algorithms) are complex and partially solves the problem, because the scheduling latency can be still too high for some applications. Moreover, this scheduling algorithm does not solve the problem in case of increasing the number inputs/outputs of switching matrix (or the number of input/output modules), because the algorithm requires complex and time consuming calculations for switching the data packets from a high number of input to output modules.

EP 1521411 discloses a scheduling mechanism for high priority and low priority data, where latency requirements for high priority data are maintained by grant substitution, i.e. utilizing low priority grants previously requested as high priority grant.

US 2005/0135356 describes a scheduling method where requests indicate cumulative amount of data contained in a queue. A central scheduler modifies the requests received to account for grants generated in current period or previous period not reflected in the queue.

Another possible solution is to increase the rate of the request messages, for example transmitting a first request message and afterwards transmitting a second request message before the reception of the first grant message corresponding to the first request message; in other words, the period between the request messages is smaller than the scheduling latency. This solution has the disadvantage to waste bandwidth of the switching matrix. In fact, the request messages include values which are calculated from the actual status of the input queues. This means that, in case of transmission of a first request message and of a second request message before the reception of the first grant message for the first request message, the requested quantity carried by the second request message includes part of the requested quantity carried by the first request message, that is a quantity is requested twice for the same data packets. Therefore more bandwidth is required to the switching matrix than the minimum required.

### SUMMARY OF THE INVENTION

In view of drawbacks of the known solutions, the main object of the present invention is to provide a method for reducing the scheduling latency of a packet switch: this object is achieved by a method according to claim 1. The basic idea is to calculate the new quantities of data packets to be switched taking into account not only the actual status of the input queues, but also the previous requested quantities during the time of the scheduling latency. This solution has the advantage that the rate of the request messages can be increased without wasting the matrix bandwidth (or without requiring an increase of the matrix bandwidth) and without designing a faster scheduling algorithm, thus reducing the scheduling latency.

Another object of the invention is to provide a method for further reducing the scheduling latency of the packet switch; this is achieved by a method according to claim 2. The basic idea is that, when there is no congestion in the packet switch, a part of the data packets stored in the input queues can be switched across the switching matrix without waiting for receiving the grant messages. This solution has the advantage to further reduce the scheduling latency of the packet switch.

According to a first aspect, the present invention provides a method for controlling the switching of data packets through a network element. The method comprises the steps of receiving first data packets at an input module and storing at least part of the received first data packets into an input queue of the input module, calculating from the status of the input queue a first quantity of the first data packets and requesting the first quantity of data packets to be switched from the input module to an output module, granting a first allowed quantity being all or part of the first requested quantity of data packets to be switched. The method further includes the steps of, before the step of granting, receiving second data packets at the input module and storing at least part of the received second data packets into the input queue, calculating from the value of the first requested quantity and from the status of the input queue a second quantity of the second data packets and requesting the second quantity of data packets to be switched from the input module to the output module.Preferably, the method further includes, before the step of requesting the first quantity, the steps of calculating from the status of the input queue a first pre-allowed quantity for at least part of the stored first data packets to be switched from the input module to the output module, and switching, from the input module to the output module across a switching matrix, the data packets stored into the input queue according to the value of the first pre-allowed quantity.

Preferably, the first allowed quantity is the grant to part of the first requested quantity and the method further includes the steps of calculating from the value of the first allowed quantity and from the value of the first requested quantity a first residual quantity of the first data packets and requesting the first residual quantity of data packets to be switched from the input module to the output module, and switching, from the input module to the output module across the switching matrix, the data packets stored into the input queue according to the value of the first allowed quantity.

Preferably, the method further includes the steps of receiving third data packets at the input module and storing at least part of the received third data packets into the input queue, and calculating from the value of the first residual quantity, from the value of the second requested quantity and from the status of the input queue a third quantity of the third data packets and of part of the first data packets and requesting the third quantity of data packets to be switched from the input module to the output module.

Preferably, the method further includes the step of storing into the input module the first requested quantity, the second requested quantity, the first pre-allowed quantity, the first residual quantity and the third requested quantity.

Preferably, the first pre-allowed quantity is further calculated from the number of a plurality of input queues storing data packets to be switched to the output module.

Preferably, the first pre-allowed quantity is further calculated from the filling of an output queue in the output module storing the data packets switched from the input module to the output module.

Preferably, the first pre-allowed quantity has a maximum pre-defined value calculated such that, in case the plurality of input modules send the data packets to the output module at substantially the same time, no overflow of the output queue in the output module occurs.

Preferably, the step of calculating the first pre-allowed quantity is performed in case the received first data packets include a field indicating a low latency requirement.

Preferably, at least part of the received data packets are divided into cells having a pre-defined value, the cells are stored into the input queue, the values of requested quantities indicate the number of cells to be switched from the input module to the output module and the value of the first allowed quantity indicates the number of allowed cells to be switched from the input module to the output module.

According to a second aspect, the present invention provides a packet switch comprising a first number of input modules for receiving data packets from a plurality of input flows, each input module comprising at least one input queue for storing the received data packets, a second number of output modules for transmitting data packets to a plurality of output flows, a switching matrix connected to the input modules and to the output modules for switching the received data packets from the input modules to corresponding output modules, at least one input controller for controlling the switching of data packets received on at least one of the input modules to corresponding output modules, wherein the input controller is adapted to calculate, after receipt of first data packets at the input module, from the status of the input queue storing at least part of the received first data packets a first quantity of the first data packets and to request the first quantity of data packets to be switched from the input module to the output module. The input controller is further adapted to calculate, before receipt of a grant for all or part of the first requested quantity of first data packets to be switched and after receipt of second data packets at the input module, from the value of the first requested quantity and from the status of the input queue storing now the at least part of the received first data packets and at least part of the received second data packets a second quantity of the second data packets and to request the second quantity of data packets to be switched from the input module to the output module.Preferably, the input controller is further adapted to calculate, before the request of the first quantity of data packets, from the status of the input queue storing the at least part of the received first data packets a first pre-allowed quantity for at least part of the first data packets to be switched from the input module to the output module, and the input module is further adapted to switch to the output module across the switching matrix the data packets stored into the input queue according to the value of the first pre-allowed quantity.

Preferably, the input module further comprises memory means for storing the first requested quantity, the second requested quantity and the first pre-allowed quantity.

According to a third aspect, the present invention provides a network element including a packet switch according to the second aspect.

According to a fourth aspect, the present invention provides a computer program comprising computer program code means adapted to perform all the steps of the method according to the first aspect when the program is run on hardware of a network element or on a computer.

According to a fifth aspect, the present invention provides a computer readable medium having a program recorded thereon, the computer readable medium comprising computer program code means adapted to perform all steps of the method according to the first aspect when the program is run on hardware of a network element or on a computer.

### BRIEF DESCRIPTION OF THE DRAWINGS

Fig.1 schematically shows a packet switch according to the prior art.
Fig.2 schematically shows a packet switch according to the invention.
Fig.3 schematically shows a timing evolution of the request and grant algorithm according to a first embodiment of the invention.
Fig.4 schematically shows a timing evolution of the request and grant algorithm according to a second embodiment of the invention.
Fig.5 schematically shows a timing evolution of the request and grant algorithm according to a third embodiment of the invention.
Fig.6 schematically shows a timing evolution of the request and grant algorithm according to a fourth embodiment of the invention.
Fig.7 schematically shows a timing evolution of the request and grant algorithm according to a fifth embodiment of the invention.

### BEST MODE FOR CARRYING OUT THE INVENTION

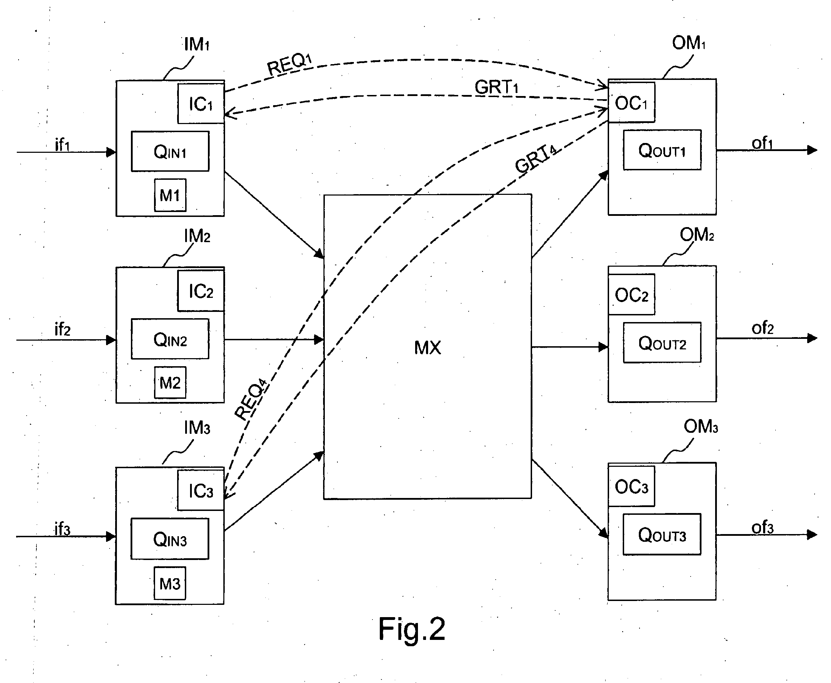

According to the invention, Fig.2 shows the input modules IM₁, IM₂, IM₃ including memories M1, M2, M3 respectively for storing the previous requested quantities during the time of the scheduling latency; preferably, the memories further store pre-allowed quantities.

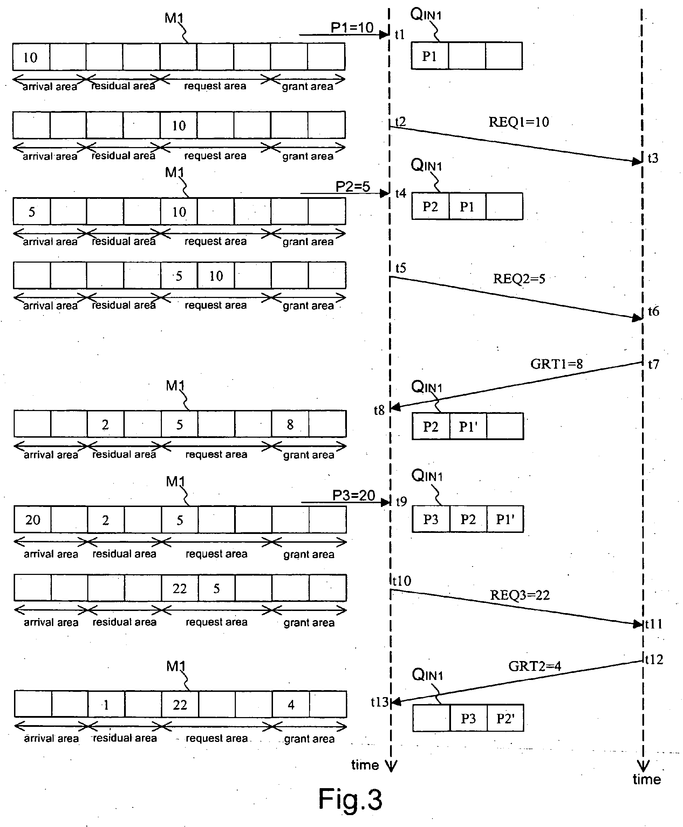

Referring to Fig.3, it shows the timing evolution of the request and grant messages according to a first embodiment of the invention. It is supposed that the messages are exchanged between the input controller IC1 of the input module IM1 and the output controller OC₁ of the output module OM1, but the same considerations apply in case the messages are exchanged between the input controller IC1 and the central controller. It is also supposed that the data packets received at the input module IM1 have a fixed size, that the input controller calculates the number of data packets (because the packets have a fixed size) and that the input queue of the input module IM1 is not storing data packets before time t1, for example because all the packets received at the input module M1 and addressed to the output module OM1 have already been switched from the input module IM1 to the output module OM1 through the switching matrix M. It is also supposed that the input queues are "virtual output queues", that is the data packets received at an input module and addressed to different output modules are stored into different input queues of the input module; therefore, Fig.1 and Fig.2 shows input module IM₁ comprising only one input queue QIN1, storing the data packets addressed to the same output module (for example, OM₁), but input module IM₁ further comprises other input queues (not shown in Fig.1 and Fig.2) storing the data packets addressed to other output modules (for example, Q_{IN12} storing data packets addressed to OM2 and Q_{IN13} storing data packets addressed to OM₃). Anyway, different solutions are possible, like for example a shared input queue in an input module, that is one input queue storing the data packets addressed to different output modules, wherein the data packets are read from the shared input queue according to the destination output module.

Fig.3 shows on the left the timing evolution of the information stored into memory M1 (in the input module IM₁) and on the right of the timing evolution of the data packets stored into the input queue QIN1.

At time t1 the input module IM1 receives 10 first packets (indicated in Fig.3 with P1) which are addressed to the output module OM₁ and are stored in the input queue (indicated with QIN1), now storing only the first data packets P1. The input controller IC₁ performs from the first received data packets P1 a calculation and the result is the value 10, equal to the number of the received first data packets P1; the value 10 is stored into the memory M1, preferably in an area indicated with "arrival area". Afterwards, the input controller IC₁ performs from the status of the memory M1 (storing the value 10 in the arrival area) a first calculation of a first quantity to request to the output controller OC₁ and the result is the value 10, equal to the 10 first packets stored in the arrival area. Alternatively, the input controller IC₁ performs the first calculation of the first quantity from the status of the input queue QIN1, storing 10 first packets P1.

Afterwards, at time t2 the input controller IC₁ transmits to the output controller OC₁ a first request message (indicated with REQ1) including the value 10 of the first quantity (indicated with REQ1=10), which is received at the output controller OC₁ at time t3; after the transmission, the value 10 in the arrival area is deleted and the value 10 of the first requested quantity is stored into another area, indicated with "request area", for indicating that the value 10 has been requested from the input controller IC₁.

At time t4 the input module IM₁ further receives 5 second data packets (indicated with P2) which are addressed to the output module OM₁ and are stored in the input queue QIN1, now storing the first 10 packets P1 and the second 5 packets P2. The input controller IC₁ performs from the second received data packets P2 a calculation and the result is the value 5, equal to the number of the received second data packets P2; the value 5 is stored into the memory M1, preferably in the "arrival area" and thus the memory M1 at t4 is storing the value 10 of first requested quantity (preferably in the request area) and the value 5 (preferably in the arrival area). At time t4 the input controller IC₁ has not yet received from the output controller OC₁ the first grant message (indicated with GRT1) corresponding to the first request message REQ1. The input controller IC₁ performs from the status of the memory M1 (storing the value 10 of the first requested quantity and the value 5 in the arrival area) a second calculation of a second quantity to request to the output controller OC₁ and the result is value 5. In fact, the input controller IC₁ has in M1 the memory of the value 10 of the first requested quantity of 10 first packets and has in M1 the memory of the value 5 in the arrival area, thus it calculates the second quantity to request to the output controller OC₁ only for the second 5 packets in the arrival area. Alternatively, the input controller IC1 performs the second calculation of the second quantity from the status of the input queue QIN1 (storing 15 packets, 10 first packets P1 and 5 second packets P2) and from the status of the memory M1 (storing the value 10 of the first requested quantity) by calculating the difference between the 15 packets stored in the input queue and the 10 packets of the first requested quantity (already requested in the first request message REQ1).

Afterwards, at time t5 the input controller IC₁ transmits to the output controller OC₁ a second request message (indicated with REQ2) including the value 5 of the second quantity (indicated with REQ2=5), which is received at the output controller OC₁ at time t6; after the transmission, the value 5 in the arrival area is deleted and the value 5 of the second requested quantity is stored in the request area, for indicating that the value 5 has been requested from the input controller IC₁. Therefore at time t5 the memory M1 is storing (preferably in the request area) both the value 10 of the first requested quantity and the value 5 of the second requested quantity; preferably, the values stored in the request area are shifted when storing a new value (in Fig.3 are shifted on the right).

At time t8 the input controller IC₁ receives from the output controller OC₁ the first grant message GRT1 corresponding to the first request message REQ1; the first grant message GRT1 includes a value of a first allowed quantity of packets stored into the input queue QIN1 which can be switched across the switching matrix from the input module to the output module. In this example the first grant message GRT1 includes the value 8 (indicated with GRT1=8) of the first allowed quantity, which means that the input module is allowed to transmit to the output module across the switching matrix a number of packets equal to 8, that is only a part (8) of the packets (15) stored in the input queue are allowed to be switched. The value 8 of the first allowed quantity is stored into the memory M1, preferably in an area indicated with "grant area". Moreover, the input controller IC₁ calculates the difference of the values between the first requested quantity (10) and the first allowed quantity (8) and the result is 2 (indicated hereinafter with "first residual quantity"), which means that 2 first packets (P1') have been requested but are not allowed to be switched from the input module to the output module, thus being still stored in the input queue QIN1. The value 2 of the first residual quantity is stored into the memory M1, preferably in an area indicated in Fig.3 with "residual area". The value 10 of the first requested quantity is deleted from the memory M1, because part (8) of the first requested quantity has been granted and the other part (2) has been stored into M1 as the first residual quantity. Therefore at time t8 the memory M1 is storing the value 2 of the first residual quantity (preferably in the residual area), the value 5 of the second requested quantity (preferably in the request area) and the value 8 of the first allowed quantity (preferably in the grant area).

At time t8 the first cycle of the scheduling algorithm has been completed and 8 packets stored into the input queue QIN1 are switched from the input module IM₁ to the output module OM₁. Preferably, Q_{IN1} is a FIFO (First In, First Out): in this case, the 8 switched packets are 8 first packets and thus at time t8 the input queue Q_{IN1} stores 2 first packets (indicated with P1', to differentiate respect to 10 first packets P1) and 5 second packets P2. After the switching, the value 8 of the first allowed quantity is deleted from the memory M1 (this is not shown in Fig.3).

At time t9 the input module IM₁ further receives 20 third data packets (indicated with P3) which are addressed to the output module OM₁ and are stored in the input queue QIN1, now storing 2 packets P1', 5 packets P2 and 20 packets P3. The input controller IC₁ performs from the third data packets P3 a calculation and the result is the value 20, equal to the number of the received third data packets P3; the value 20 is stored into the memory M1, preferably in the "arrival area". At time t9 the input controller IC₁ has not yet received from the output controller OC₁ the second grant message (indicated with GRT2) corresponding to the second request message REQ2. The input controller IC₁ performs from the status of the memory M1 (storing the value 5 of the second requested quantity, the value 2 of the first residual quantity and the value 20 in the arrival area) a third calculation of a third quantity to request to the output controller OC₁ and the result is value 22. In fact, the input controller IC₁ has in M1 the memory the value 5 of the previous transmission of the second requested quantity and has in M1 the memory of the value 20 in the arrival area, thus it calculates a third quantity to request to the output controller OC₁ as the sum of value 20 of the third packets (preferably in the arrival area) and of value 2 of the first residual quantity (2 first packets were requested by the first request message REQ1, but have not been granted by the first grant message GRT1). Alternatively, the input controller IC₁ performs the third calculation of the third quantity from the status of the input queue QIN1 (storing 27 packets, 2 first packets P1, 5 second packets P2 and 20 third packets P3) and from the status of the memory M1 (storing the value 5 of the second requested quantity) by calculating the difference between the 27 packets stored into the input queue and the 5 packets of the second requested quantity (already requested in the second request message REQ2).

Afterwards, at time t10 the input controller IC₁ transmits to the output controller OC₁ a third request message (indicated with REQ3) including the value 22 of the third quantity (indicated with REQ3=22); after the transmission, the value 2 of the first residual quantity is deleted, the value 20 in the arrival area is deleted and the value 22 of the third requested quantity is stored (preferably in the request area) for indicating that the value 22 has been requested from the input controller IC₁. Therefore at time t10 the memory M1 is storing (preferably in the request area) the value 5 of the second requested quantity and the value 22 of the third requested quantity.

At time t13 the input controller IC₁ receives from the output controller OC1 the second grant message GRT2 corresponding to the second request message REQ2; the second grant message GRT2 includes a value of a second allowed quantity of packets stored into the input queue QIN1 which can be switched across the switching matrix from the input module to the output module. In this example the second grant message GRT2 includes the value 4 (indicated with GRT2=4) of the second allowed quantity, which means that the input module is allowed to transmit to the output module across the switching matrix a number of packets equal to 4, that is only a part (4) of the packets (27) stored in the input queue are allowed to be switched. The value 4 of the second allowed quantity is stored into the memory M1, preferably in the grant area. Moreover, the input controller IC₁ calculates the difference of the values between the second requested quantity (5) and the second allowed quantity (4) and the result is 1 (indicated hereinafter with "second residual quantity"), which means that 1 second packet (P2') has been requested but is not allowed to be switched from the input module to the output module, thus being still stored in the input queue QIN1. The value 1 of the second residual quantity is stored into the memory M1, preferably in the residual area. The value 5 of the second requested quantity is deleted from the memory M1, because part (4) of the second requested quantity has been granted and the other part (1) has been stored into M1 as the second residual quantity. Therefore at time t13 the memory M1 is storing the value 1 of the second residual quantity (preferably in the residual area), the value 22 of the third requested quantity (preferably in the request area) and the value 4 of the second allowed quantity (preferably in the grant area).

At time t13 the second cycle of the scheduling algorithm has been completed and 4 packets stored into the input queue QIN1 are switched from the input module IM₁ to the output module OM₁. If Q_{IN1} is a FIFO, the 4 switched packets are 2 first packets P1' and 2 second packets and thus at time t13 the input queue Q_{IN1} stores 3 second packets (indicated with P2', to differentiate respect to 5 second packets P2) and 20 third packets P3. After the switching, the value 4 of the second allowed quantity is deleted from the memory M1 (this is not shown in Fig.3).

The subsequent timing evolution of the request and grant messages (not shown in Fig.3), of the information stored into the memory M1 and into the input queue QIN1 can be generated by a person skilled in the art according to the above description.

In general, according to the main object of the invention the memory M1 stores the values of requested quantities during a time unit between the transmission of a request message and the reception of the corresponding grant message, that is during the time of the scheduling latency; Fig.3 shows only REQ2 between REQ1 and GTR1, but further requests (REQ4, REQ5, ...) can be transmitted (between time t2 and t8) from the input controller IC₁ to the output controller OC₁ in case of receiving (between time t2 and t8) further data packets (P4, P5, ...) and corresponding values of the requested quantities (carried by the requests REQ4, REQ5, ...) are stored into the memory M1. When receiving the grant message, the input controller IC₁ performs the calculation of a residual quantity indicating the quantity of packets requested but not allowed to be switched, it stores the value of the residual quantity into the memory M1 and deletes from the memory M1 the value of requested quantity corresponding to the received grant message.

Preferably, the values stored in the areas (arrival area, residual area, request area, grant area) of the memory M1 are shifted when storing a new value (Fig.3 shows a shift on the right).

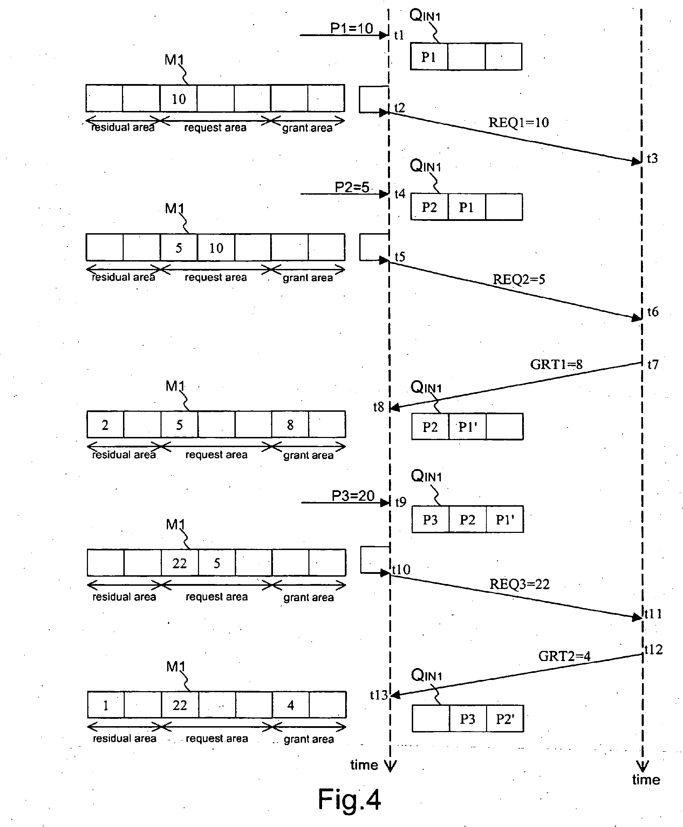

Fig.4 shows the timing evolution of the request and grant messages according to a second embodiment of the invention, wherein the information is stored into the memory M1 according to a different arrangement. More specifically, the memory M1 does not include the "arrival area".

At time t1 the input module IM₁ receives 10 first packets P1 which are addressed to the output module OM₁ and are stored in the input queue QIN1, now storing only the first data packets P1. The input controller IC₁ performs from the status of the input queue Q_{IN1} (storing the 10 first data packets P1) a first calculation of a first quantity to request to the output controller OC₁ and the result is the value 10, equal to the number of the 10 first packets stored in the input queue QIN1. The value 10 of the first quantity is also stored into the memory M1 in the input module IM₁, preferably in the request area; the storing operation is indicated in Fig.4 with a closed arrow. Afterwards, at time t2 the input controller IC₁ transmits to the output controller OC₁ a first request message REQ1 including the value 10 of the first quantity (indicated with REQ1=10), which is received at the output controller OC₁ at time t3.

At time t4 the input module IM₁ further receives 5 second data packets P2 which are addressed to the output module OM₁ and are stored in the input queue QIN1, now storing the first 10 packets P1 and the second 5 packets P2. At time t4 the input controller IC₁ has not yet received from the output controller OC₁ the first grant message (indicated with GRT1) corresponding to the first request message REQ1. The input controller IC₁ performs from the status of the input queue QIN1 (storing the 10 first packets P1 and the 5 second packets P2) and from the status of the memory M1 (storing the value 10 of the first requested quantity) a second calculation of a second quantity to request to the output controller OC₁ and the result is value 5. In fact, the input controller IC₁ detects that the input queue QIN1 is storing 15 packets, but it also has in M1 the memory of the value 10 of the first requested quantity of 10 first packets and thus it calculates the second quantity to request to the output controller OC₁ only for the second 5 packets, by calculating the difference between the 15 packets stored in the input queue and the first requested quantity of 10 packets already requested in the first request message. The value 5 of the second quantity is also stored into the memory M1 (preferably in the request area), thus storing the first requested quantity 10 and the second requested quantity 5.

Afterwards, at time t5 the input controller IC₁ transmits to the output controller OC₁ a second request message (indicated with REQ2) including the value 5 of the second quantity (indicated with REQ2=5), which is received at the output controller OC₁ at time t6.

At time t8 the input controller IC₁ receives from the output controller OC₁ the first grant message GRT1 corresponding to the first request message REQ1; the first grant message GRT1 includes a value of a first allowed quantity of packets stored into the input queue QIN1 which can be switched across the switching matrix from the input module to the output module. In this example the first grant message GRT1 includes the value 8 (indicated with GRT1=8) of the first allowed quantity, which means that the input module is allowed to transmit to the output module across the switching matrix a number of the packets equal to 8, that is only a part (8) of the packets (15) stored in the input queue are allowed to be switched. The value 8 of the first allowed quantity is stored into the memory M1, preferably in the grant area. Moreover, the input controller IC₁ calculates the difference of the values between the first requested quantity (10) and the first allowed quantity (8) and the result is 2 (indicated hereinafter with "first residual quantity"), which means that 2 first packets (P1') have been requested but are not allowed to be switched from the input module to the output module, thus being still stored in the input queue QIN1. The value 2 of the first residual quantity is stored into the memory M1 (preferably in the residual area) and the value 10 of the first requested quantity is deleted from the memory M1, because part (8) of the first requested quantity has been granted and the other part (2) has been stored in M1 as the first residual quantity. Therefore at time t8 the memory M1 is storing the value 2 of the first residual quantity (preferably in the residual area), the value 5 of the second requested quantity (preferably in the request area) and the value 8 of the first allowed quantity (preferably in the grant area).

At time t8 the first cycle of the scheduling algorithm has been completed and 8 packets are switched from the input module IM₁ to the output module OM₁. If QIN1 is a FIFO, the 8 switched packets are 8 first packets and thus at time t8 the input queue Q_{IN1} stores 2 first packets (indicated with P1', to differentiate respect to 10 first packets P1) and 5 second packets P2. After the switching, the value 8 of the first allowed quantity is deleted from the memory M1 (this is not shown in Fig.4).

At time t9 the input module IM₁ further receives 20 third data packets (indicated with P3) which are addressed to the output module OM₁ and are stored in the input queue QIN1, now storing 2 packets P1', 5 packets P2 and 20 packets P3. At time t9 the input controller IC₁ has not yet received from the output controller OC₁ the second grant message (indicated with GRT2) corresponding to the second request message REQ2. The input controller IC₁ performs from the status of the input queue Q_{IN1} (storing 2 first packets P1', 5 second packets P2 and 20 third packets P3) and from the status of the memory M1 (storing the value 5 of the second requested quantity and the value 2 of the first residual quantity) a third calculation of a third quantity to request to the output controller OC₁ and the result is value 22. In fact, the input controller IC₁ detects that the input queue QIN1 is storing a total of 27 packets, but it also has in M1 the memory of the previous transmission of the second requested quantity of 5 packets and thus it calculates a third quantity to request to the output controller OC₁ only for 20 third packets and for 2 first packets (these 2 first packets were requested by the first request message REQ1, but have not been granted by the first grant message GRT1), by calculating the difference between the 27 packets stored into the input queue and the 5 packets of the second requested quantity (already requested in the second request REQ2).

Afterwards, at time t10 the input controller IC₁ transmits to the output controller OC₁ a third request message (indicated with REQ3) including the value 22 of the third quantity (indicated with REQ3=22); after the transmission, the value 2 of the first residual quantity is deleted from the memory M1 and the value 22 of the third requested quantity is stored into the memory M1. Therefore at time t10 the memory M1 is storing (preferably in the request area) the value 5 of the second requested quantity and the value 22 of the third requested quantity.

The timing evolution of the request and grant messages, of the memory M1 and of the input queue QIN1 between times t10 and t13 is the same of the first embodiment.

According to another embodiment of the invention (not shown in the drawings), the memory M1 differs from the arrangement of the first or second embodiment in that it does not include the "grant area".

The first and the second embodiments of Fig.3 and Fig.4 show the transmission of one request message REQ3 including the value 22, but it's also possible the transmission of two different messages, one including the value 20 (for requesting the third received data packets) and the other including the value 2 (for requesting the first residual quantity).

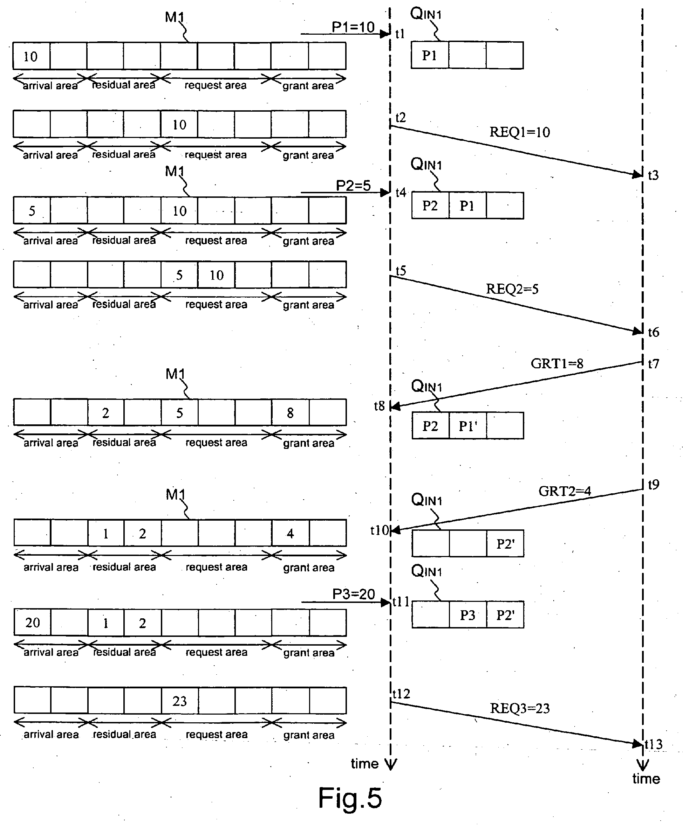

Fig.5 shows the timing evolution of the request and grant messages according to a third embodiment of the invention, wherein the information is stored in the memory according to the arrangement of the first embodiment and wherein the timing evolution of the request and grant messages differs from the timing evolution of the first embodiment in that the second grant is received before the reception of the third data packets P3.

The timing evolution of the memory M1, of the input queue QIN1 and of the request and grant message is the same of the first embodiment till time t8.

At time t10 the input controller IC₁ receives from the output controller OC₁ the second grant message GRT2 corresponding to the second request message REQ1; the second grant message GRT2 includes a value of a second allowed quantity of packets stored into the input queue QIN1 which can be switched across the switching matrix from the input module to the output module. Again, in this example the second grant message GRT2 includes the value 4 (indicated with GRT2=4) of the second allowed quantity, which means that the input module is allowed to transmit to the output module across the switching matrix a number of packets equal to 4, that is only a part (4) of the packets (7) stored in the input queue are allowed to be switched. The value 4 of the second allowed quantity is stored into the memory M1 (preferably in the grant area). Moreover, the input controller IC₁ calculates the difference of the values between the second requested quantity (5) and the second allowed quantity (4) and the result is 1 (indicated hereinafter with "second residual quantity"), which means that 1 second packet has been requested but is not allowed to be switched from the input module to the output module, thus being still stored in the input queue QIN1. The value 1 of the first residual quantity is stored into the memory M1 (preferably in the residual area). The value 5 of the first requested quantity is deleted from the memory M1, because part (4) of the second requested quantity has been granted and the other part (1) has been stored in M1 as the second residual quantity. Therefore at time t10 the memory M1 is storing the value 2 of the first residual quantity and the value 1 of the second residual quantity (preferably in the residual area) and the value 4 of the second allowed quantity (preferably in the grant area). Preferably, the value 2 of the first residual quantity is shifted when storing the value 1 of the second requested quantity (Fig.5 shows a shift on the right).

At time t10 the second cycle of the scheduling algorithm has been completed and 4 packets are switched from the input module to the output module. If QIN1 is a FIFO, the 4 switched packets are2 first packets P1' and 2 second packets and thus at time t10 the input queue Q_{IN1} stores 3 first packets (indicated with P2', to differentiate respect to second packets P2). After the switching, the value 4 of the second allowed quantity is deleted from the memory M1 (this is not shown in Fig.5).

At time t11 the input module IM₁ further receives 20 third data packets P3 which are addressed to the output module OM₁ and are stored in the input queue QIN1, now storing 3 packets P2' and 20 packets P3. The input controller IC₁ performs from the third data packets P3 a calculation and the result is the value 20, equal to the number of the received second data packets P3; the value 20 is stored into the memory M1, preferably in the "arrival area".

The input controller IC₁ performs from the status of the memory M1 (storing the value 2 of the first residual quantity and the value 1 of the second residual quantity) a third calculation of a third quantity to request to the output controller OC₁ and the result is value 23. In fact, the input controller IC₁ has in M1 the memory of the value 2 of the first residual quantity and the value 1 of the second residual quanitity, thus it calculates a third quantity to request to the output controller OC₁ as the sum of value 20 of the third packets (preferably in the arrival area), of value 2 of the first residual quantity (2 first packets were requested by the first request message REQ1, but have not been granted by the first grant message GRT1) and of value 1 of the second residual quantity (1 second packet was requested by the second request message REQ2, but has not been granted by the second grant message GRT2). Alternatively, the input controller IC₁ performs the third calculation of the third quantity from the status of the input queue QIN1 (storing 23 packets, 20 third packets P3 and 3 second packets P2') and from the status of the memory M1 (in this case not storing any value in the request area), by calculating the difference between the 23 packets stored into the input queue and value 0 (no value is stored in the request area of M1).

Afterwards, at time t12 the input controller IC₁ transmits to the output controller OC₁ a third request message (indicated with REQ3) including the value 23 of the third quantity (indicated with REQ3=23); after the transmission, the values 2 of the first residual quantity and 1 of the second residual quantity are deleted, the value 20 in the arrival area is deleted and the value 23 of the third requested quantity is stored (preferably in the request area) for indicating that the value 23 has been requested from the input controller IC₁. Therefore at time t12 the memory M1 is storing (preferably in the request area) the value 23 of the third requested quantity.

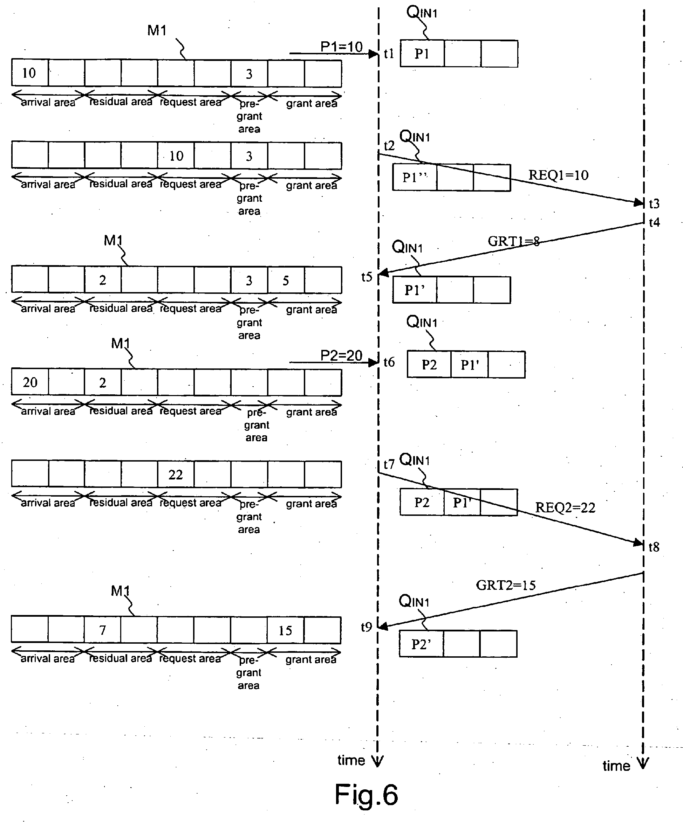

Fig.6 shows the timing evolution of the request and grant messages according to a fourth embodiment of the invention, wherein the scheduling latency is further reduced when there is no congestion in the packet switch. This can be perfomed for example at the start-up of the packet switch, that is when the packet switch is activated for the first time and there is no congestion in the packet switch, because the switching matrix and the output queues have not yet received any data packet. The fourth embodiment can be perfomed also run-time, according to different criteria. Again, it is supposed that the messages are exchanged between the input controller IC₁ of input module IM₁ and the output controller OC₁ of output module OC₁, but the same considerations apply in case the messages are exchanged between the input controller IC₁ and the central controller. Again, it is also supposed that the data packets received at the input module IM₁ have a fixed size, that the input controller IC₁ calculates the number of data packets stored into the input queue and that the input queue of the input module connected to the input module IM₁ is not storing data packets before time t1.

Moreover, it is supposed that data packets (P2 in Fig.3 and Fig.4) are not received between the transmission of the first request message and the reception of the corresponding first grant message.

At time t1 the input module IM₁ receives 10 first packets P1 which are addressed to the output module OM₁ and are stored into the input queue QIN1, now storing only the first data packets P1. The input controller IC₁ performs from the first data packets P1 a calculation and the result is the value 10, equal to the number of the received first data packets P1; the value 10 is stored into the memory M1 in the input module, preferably in the arrival area. Afterwards, the input controller IC₁ performs from the status of the memory M1 (storing the value 10 in the arrival area) the calculation of a value of a first pre-allowed quantity of packets stored into the input queue QIN1 which can be switched across the switching matrix from the input module to the output module, without waiting for receiving the first grant message. Alternatively, the input controller IC₁ performs the calculation of the first pre-allowed quantity from the status of the input queue QIN1, storing 10 first data packets P1. In this example the value of the first pre-allowed quantity is 3, which means that the input module is allowed to transmit to the output module across the switching matrix a number of packets equal to 3, that is a part (3) of the first requested packets (10) are allowed to be switched, without waiting for receiving the first grant message. The value 3 of the first pre-allowed quantity is also stored into the memory M1, preferably in an area (indicated in Fig.6 with "pre-grant area") different from the area storing the requested quantities ("request area") and from the area storing the residual quantities ("residual area"). Therefore at time t1 the memory M1 is storing the value 10 (preferably in the the arrival area) and the value 3 of the first pre-allowed quantity (preferably in the pre-grant area). The input controller IC₁ performs the first calculation of the first quantity to request to the output controller OC₁ like indicated for the first embodiment, and the result is the value 10.

Afterwards, at time t2 the input controller IC₁ transmits to the output controller OC₁ a first request message REQ1 including the value 10 of the first quantity, which is received at the output controller OC₁ at time t3; after the transmission, the value 10 in the arrival area is deleted and the value 10 of the first requested quantity is stored in the request area, for indicating that the value 10 has been requested from the input controller IC₁.

Moreover, 3 first data packets are switched from the input module IM₁ to the output module OM₁, according to the value 3 of the first pre-allowed quantity and without waiting for receiving the first grant message; therefore the input queue QIN1 now stores 7 first data packets (indicated with P1", to differentiate respect to 10 first packets P1). After the switching, the value 3 of the first pre-allowed quantity is not deleted from the memory M1.

At time t5 the input controller IC₁ receives from the output controller OC₁ the first grant message GRT1 corresponding to the first request message REQ1 and including the value 8 of the first allowed quantity, which means that 8 packets are allowed to be switched from the input module IM₁ to the output module OM₁ through the switching matrix. The input controller IC₁ has the memory into M1 of the value 3 of the first pre-allowed quantity, which means that 3 first data packets have already been switched and thus 5 data packets (calculated as the difference between the value 8 of the first allowed quantity and the value 3 of the first pre-allowed quantity) can still be switched from the input module IM₁ to the output module OM₁. The value 5 (part of the first allowed quantity) is stored into the memory M1 (preferably in the grant area). Moreover, the input controller IC₁ calculates the difference of the values between the first requested quantity (10) and the first allowed quantity (8) and the result is the first residual quantity 2, which means that 2 first packets (P1') have been requested but are not allowed to be switched from the input module to the output module, thus being still stored in the input queue QIN1. The value 2 of the first residual quantity is stored into the memory M1 (preferably in the residual area). The value 10 of the first requested quantity is deleted from the memory M1, because part (8) of the first requested quantity has been granted and the other part (2) has been stored into M1 as the first residual requested quantity. Therefore at time t5 the memory M1 is storing the value 2 of the first residual quantity (preferably in the residual area), the value 3 of the first pre-allowed quantity (preferably in the pre-grant area) and the value 5 of part of the first allowed quantity (preferably in the grant area).

At time t5 the first cycle of the scheduling algorithm has been completed and 5 first packets are switched from the input module IM₁ to the output module OM₁. If QIN1 is a FIFO, the 5 switched packets are 5 first packets and thus attime t5 the input queue Q_{IN1} stores 2 first packets (indicated with P1', to differentiate respect to 10 first packets P1). After the switching, the value 3 of the first pre-allowed quantity and the value 5 of part of the first allowed quantity is deleted from the memory M1 (this is not shown in Fig.6).At time t6 the input module IM₁ further receives 20 second data packets P2 which are addressed to the output module OM₁ and are stored in the input queue QIN1, now storing 2 packets P1' and 20 packets P2. The input controller IC₁ performs from the second data packets P2 a calculation and the result is the value 20, equal to the number of the received second data packets P2; the value 20 is stored into the memory M 1 (preferably in the arrival area).

The input controller IC₁ performs from the status of the memory M1 (storing the value 2 of the first residual quantity) a second calculation of a second quantity to request to the output controller OC₁ and the result is value 22. In fact, the input controller IC₁ has in M1 the memory of the value 2 of the first residual quantity, thus it calculates a second quantity to request to the output controller OC₁ as the sum of value 20 of the second packets (preferably in the arrival area), and of value 2 of the first residual quantity (2 first packets were requested by the first request message REQ1, but have not been granted by the first grant message GRT1). Alternatively, the input controller IC₁ performs the second calculation of the second quantity from the status of the input queue QIN1 (storing 22 packets, 20 second packets P3 and 2 first packets P1') and from the status of the memory M1 (in this case not storing any value in the request area), by calculating the difference between the 22 packets stored into the input queue and value 0 (no value is stored in the request area of M1).

Afterwards, at time t7 the input controller IC₁ transmits to the output controller OC₁ a second request message REQ2 including the value 22 of the second quantity (indicated with REQ3=22); after the transmission, the value 2 of the first residual quantity is deleted, the value 20 in the arrival area is deleted and the value 22 of the second requested quantity is stored (prefeably in the request area) for indicating that the value 22 has been requested from the input controller IC₁. Therefore at time t7 the memory M1 is storing (preferably in the request area) the value 22 of the second requested quantity.

At time t9 the input controller IC₁ receives from the output controller OC₁ the second grant message GRT2 corresponding to the second request message REQ2; the second grant message GRT2 includes a value of a second allowed quantity of packets stored into the input queue QIN1 which can be switched across the switching matrix from the input module to the output module. In this example the second grant message GRT2 includes the value 15 (indicated with GRT2=15) of the second allowed quantity, which means that the input module is allowed to transmit to the output module across the switching matrix a number of packets equal to 15, that is only a part (15) of the packets (21) stored in the input queue are allowed to be switched. The value 15 of the second allowed quantity is stored into the memory M1, preferably in the grant area. Moreover, the input controller IC₁ calculates the difference of the values between the second requested quantity (22) and the second allowed quantity (15) and the result is 7 (indicated hereinafter with "second residual quantity"), which means that 7 second packets have been requested but are not allowed to be switched from the input module to the output module, thus being still stored in the input queue QIN1. The value 7 of the first residual quantity is stored into the memory M1, preferably in the "residual area". The value 22 of the second requested quantity is deleted from the memory M1, because part (15) of the second requested quantity has been granted and the other part (7) has been stored in M1 as the second residual quantity. Therefore at time t9 the memory M1 is storing the value 7 of the second residual quantity (preferably in the residual area) and the value 15 of the second allowed quantity (preferably in the grant area).

At time t9 the second cycle of the scheduling algorithm has been completed and 15 packets stored into the input queue QIN1 are switched from the input module IM₁ to the output module OM₁. If Q_{IN1} is a FIFO, the 15 switched packets are 2 first packets P1' and 13 second packets and thus at time t9 the input queue Q_{IN1} stores 7 second packets (indicated with P2', to differentiate respect to the second packets P2). After the switching, the value 15 of the second allowed quantity is deleted from the memory M1 (this is not shown in Fig.6).

Preferably, the first pre-allowed quantity is calculated at the input controller according to the following different criteria:
- from the status of the input queue in the input controller;
- from the status of the input queue and from the number of the plurality of input queues which can switch the data packets to the same output module;
- from the status of the input queue and from the filling of the output queue in the output module;
- from the status of the input queue, from the number of the plurality of input queues and from the filling of the output queue in the output module.

Preferably, the value of the first pre-allowed quantity has a maximum pre-defined value, which is calculated such that, in case all (or a pre-defined number) of the input modules send the data packets (stored into the input queues and addressed to the same output module) to the output module at substantially the same time, no overflow of the output queue in the output module occurs. For example, the size of the output queue is divided by the number of the input modules (or by the number of the input queues, in case the input modules includes more than one input queue) and the result is the maximum pre-defined value.

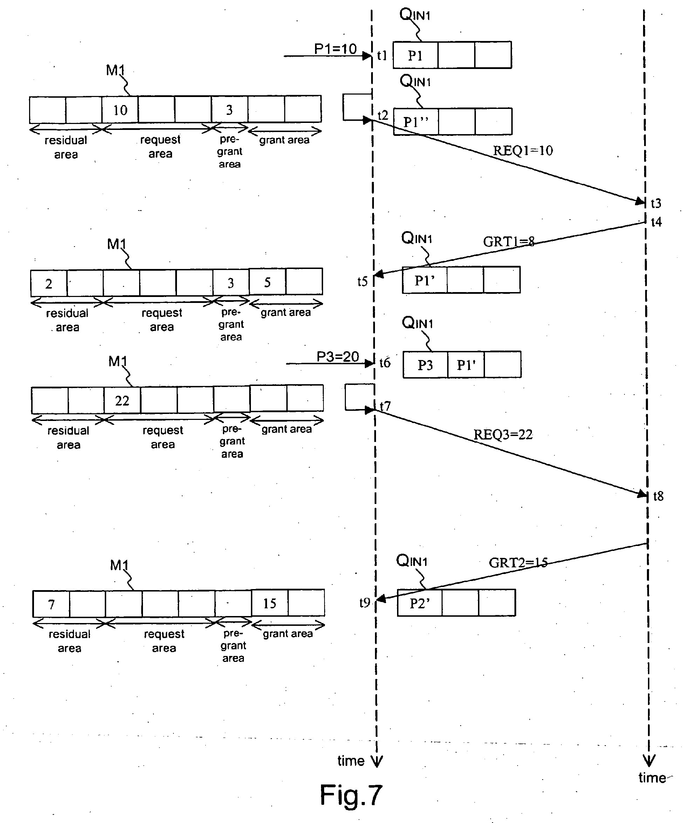

Fig.7 shows a fifth embodiment of the invention, which differs from the fourth embodiment in that the memory M1 does not include the "arrival area", like explained for the first and second embodiment.

According to a sixth embodiment of the invention (not shown in the drawings), a combination of the first (or second) and fourth embodiment is possible, that is:
- first the store of the first (or second) quantity (like indicated in the first embodiment of Fig.3 or in the second embodiment of Fig.4) and afterwards calculation of the pre-allowed quantities (like indicated in the fourth embodiment of Fig.6); or
- first the calculation of the pre-allowed quantities (like indicated in the fourth embodiment of Fig.6) and afterwards the store of the first (or second) quantity (like indicated in the first embodiment of Fig.3 or in the second embodiment of Fig.4).

According to another embodiment of the invention (not shown in the drawings), it differs from the fourth (or fifth or sixth) embodiment in that the pre-grant area is not divided by the grant area, that is the grant area includes both the allowed quantities and the pre-allowed quantities.

Preferably, in the above embodiments one (or more) input module includes different queues according to the latency requirements of the received data packets. For example, the input module includes:
- an high priority input queue for storing the high priority data packets, that is the data packets having a low latency requirement; and
- a low priority input queue for storing the low priority data packets, that is the data packets which can support an high latency requirement.

Preferably, the received data packets include a field indicating the low or high latency requirement.

Preferably, the received data packets are stored into the high or low priority input queues, depending on the value of this field.

The invention can be performed also in case one (or more) output module includes a plurality of output flows.

Preferably, the requests are transmitted synchronously, according to a pre-defined clock period.

Preferably, the pre-defined clock period depends on the required scheduling latency, which can further depend on the required latency of the packet switch (or of the network element including the packet switch).

Preferably, the requests are transmitted asynchronously, for example when triggered by the reception of new data packets or by the reception of the grant messages.

The method according to the invention can be advantageously implemented on an electronic device (the packet switch) of a network element, for example on an Application Specific Integrated Circuit (ASIC), a Field Programmable Gate Array (FPGA), an Electrically Programmable Logical Device (EPLD), a microprocessor (external or embedded into a FPGA).

The method according to the invention is implemented through or together with a software program like Very high speed integrated circuit Hardware Description Language (VHDL) or Verilog or C language, by one or more VHDL or Verilog processes or C routines.

## Claims

1. Method for controlling the switching of data packets through a network element, the method comprising the steps of:
- receiving (t1) first data packets (P1) at an input module and storing at least part of the received first data packets into an input queue (QIN1) of the input module;
- calculating from the status of the input queue a first quantity of the first data packets and requesting (t2) the first quantity of data packets to be switched from the input module to an output module;
- granting (t8) a first allowed quantity being all or part of the first requested quantity of data packets to be switched;
**characterized by** the steps of, before the step of granting:
- receiving (t4) second data packets (P2) at the input module and storing at least part of the received second data packets into the input queue;
- calculating from the value of the first requested quantity and from the status of the input queue a second quantity of the second data packets and requesting (t5) the second quantity of data packets to be switched from the input module to the output module.

2. Method according to claim 1, the method further including, before the step of requesting the first quantity, the steps of:
- calculating from the status of the input queue a first pre-allowed quantity for at least part of the stored first data packets to be switched from the input module to the output module;
- switching, from the input module to the output module across a switching matrix, the data packets stored into the input queue according to the value of the first pre-allowed quantity.

3. Method according to claims 1 or 2, wherein the first allowed quantity is the grant to part of the first requested quantity, the method further including the steps of:
- calculating from the value of the first allowed quantity and from the value of the first requested quantity a first residual quantity of the first data packets and requesting the first residual quantity of data packets to be switched from the input module to the output module;
- switching, from the input module to the output module across the switching matrix, the data packets stored into the input queue according to the value of the first allowed quantity.

4. Method according to claim 3, further including the steps of:
- receiving (t9) third data packets (P3) at the input module and storing at least part of the received third data packets into the input queue;
- calculating from the value of the first residual quantity, from the value of the second requested quantity and from the status of the input queue a third quantity of the third data packets and of part of the first data packets and requesting (t10) the third quantity of data packets to be switched from the input module to the output module.

5. Method according to any of the previous claims, further including the steps of storing into the input module the first requested quantity, the second requested quantity, the first pre-allowed quantity, the first residual quantity and the third requested quantity.

6. Method according to any claims 2 to 5, wherein the first pre-allowed quantity is further calculated from the number of a plurality of input queues storing data packets to be switched to the output module.

7. Method according to any of claims 2 to 6, wherein the first pre-allowed quantity is further calculated from the filling of an output queue in the output module storing the data packets switched from the input module to the output module.

8. Method according to claims 6 or 7, wherein the first pre-allowed quantity has a maximum pre-defined value calculated such that, in case the plurality of input modules send the data packets to the output module at substantially the same time, no overflow of the output queue in the output module occurs.

9. Method according to any of claims 2 to 8, wherein the step of calculating the first pre-allowed quantity is performed in case the received first data packets include a field indicating a low latency requirement.

10. Method according to any of the previous claims, wherein at least part of the received data packets are divided into cells having a pre-defined value, the cells are stored into the input queue, the values of requested quantities indicate the number of cells to be switched from the input module to the output module and the value of the first allowed quantity indicates the number of allowed cells to be switched from the input module to the output module.

11. Packet switch comprising:
- a first number of input modules (IM₁, IM₂, IM₃) for receiving data packets from a plurality of input flows (if₁, if₂, if₃), each input module comprising at least one input queue (QIN1, QIN2, QIN3) for storing the received data packets;
- a second number of output modules (OM₁, OM₂, OM₃) for transmitting data packets to a plurality of output flows (of1, of2, of3);
- a switching matrix (MX) connected to the input modules and to the output modules for switching the received data packets from the input modules to corresponding output modules;
- at least one input controller (IC1, IC2, IC3) for controlling the switching of data packets received on at least one of the input modules to corresponding output modules, wherein the input controller is adapted to calculate, after receipt of first data packets (P1) at the input module, from the status of the input queue storing at least part of the received first data packets a first quantity of the first data packets and to request the first quantity of data packets to be switched from the input module to the output module;
**characterized in that**
the input controller is further adapted to calculate, before receipt of a grant for all or part of the first requested quantity of first data packets to be switched and after receipt of second data packets at the input module, from the value of the first requested quantity and from the status of the input queue storing now the at least part of the received first data packets and at least part of the received second data packets a second quantity of the second data packets and to request the second quantity of data packets to be switched from the input module to the output module.

12. Packet switch according to claim 11, wherein the input controller is further adapted to calculate, before the request of the first quantity of data packets, from the status of the input queue storing the at least part of the received first data packets a first pre-allowed quantity for at least part of the first data packets to be switched from the input module to the output module, wherein the input module is further adapted to switch to the output module across the switching matrix the data packets stored into the input queue according to the value of the first pre-allowed quantity.

13. Packet switch according to claims 11 or 12, wherein the input module further comprises memory means (M1) for storing the first requested quantity, the second requested quantity and the first pre-allowed quantity.

14. Network element including a packet switch according to any of claims 11 to 13.

15. Computer program comprising computer program code means adapted to perform all the steps of the method according to any of claim 1 to 10 when the program is run on hardware of a network element.

## Patentansprüche

1. Verfahren zum Steuern der Vermittlung von Datenpaketen über ein Netzwerkelement, wobei das Verfahren die folgenden Schritte umfasst:
- Empfangen (t1) von ersten Datenpaketen (P1) an einem Eingangsmodul, und Speichern mindestens eines Teils der empfangenen ersten Datenpakete in einer Eingangswarteschlange (QIN1) des Eingangsmoduls;
- Berechnen, auf der Basis des Zustands der Eingangswarteschlange, einer ersten Menge der ersten Datenpakete, und Anfordern (t2) der Vermittlung der ersten Menge von Datenpaketen von dem Eingangsmodul an das Ausgangsmodul;
- Gewähren (t8) einer ersten genehmigten Menge, welche die Gesamtmenge oder eine Teilmenge der angeforderten ersten Menge von zu vermittelnden Datenpaketen ist;
**gekennzeichnet durch** die vor dem Schritt des Gewährens ausgeführten folgenden Schritte:
- Empfangen (t4) von zweiten Datenpaketen (P2) an dem Eingangsmodul, und Speichern mindesten eines Teils der empfangenen zweiten Datenpakete in der Eingangswarteschlange;
- Berechnen, auf der Basis des Wertes der ersten angeforderten Menge und auf der Basis des Zustands der Eingangswarteschlange, einer zweiten Menge der zweiten Datenpakete, und Anfordern (t5) der Vermittlung der zweiten Menge von Datenpaketen von dem Eingangsmodul an das Ausgangsmodul.

2. Verfahren nach Anspruch 1, wobei das Verfahren vor dem Schritt des Anforderns der ersten Menge weiterhin die folgenden Schritte umfasst:
- Berechnen, auf der Basis des Zustands der Eingangswarteschlange, einer ersten vorgenehmigten Menge für mindestens einen Teil der gespeicherten ersten Datenpakete, welche von dem Eingangsmodul an das Ausgangsmodul vermittelt werden sollen;
- Vermitteln, von dem Eingangsmodul an das Ausgangsmodul über eine Schaltmatrix, der in der Eingangswarteschlange gespeicherten Datenpakete gemäß dem Wert der ersten vorgenehmigten Menge.

3. Verfahren nach den Ansprüchen 1 oder 2, wobei die erste genehmigte Menge die Gewährung für einen Teil der ersten angeforderten Menge ist, wobei das Verfahren weiterhin die folgenden Schritte umfasst:
- Berechnen, auf der Basis der ersten genehmigten Menge und des Wertes der ersten angeforderten Menge, einer ersten Restmenge der ersten Datenpakete, und Anfordern der Vermittlung der ersten Restmenge von Datenpaketen von dem Eingangsmodul an das Ausgangsmodul;
- Vermitteln, über die Schaltmatrix, der in der Eingangswarteschlange gespeicherten Daten vom Eingangsmodul an das Ausgangsmodul gemäß dem Wert der ersten genehmigten Menge.

4. Verfahren nach Anspruch 3, weiterhin umfassend die folgenden Schritte:
- Empfangen (t9) von dritten Datenpaketen (P3) am Eingangsmodul, und Speichern mindestens eines Teils der empfangenen dritten Datenpakete in der Eingangswarteschlange;
- Berechnen, auf der Basis des Wertes der ersten Restmenge, des Wertes der zweiten angeforderten Menge und des Zustands der Eingangswarteschlange, einer dritten Menge der dritten Datenpakete und eines Teils der ersten Datenpakete, und Anfordern (t10) der Vermittlung der dritten Menge von Datenpaketen von dem Eingangsmodul an das Ausgangsmodul.

5. Verfahren nach einem beliebigen der vorstehenden Ansprüche, weiterhin umfassend die Schritte des Speicherns der ersten angeforderten Menge, der zweiten angeforderten Menge, der ersten vorgenehmigten Menge, der ersten Restmenge und der dritten angeforderten Menge im Eingangsmodul.

6. Verfahren nach einem beliebigen der Ansprüche 2 bis 5, wobei die erste vorgenehmigte Menge weiterhin auf der Basis der Anzahl einer Mehrzahl von Eingangswarteschlangen, in welchen an das Ausgangsmodul zu vermittelnde Datenpakete gespeichert sind, berechnet wird.

7. Verfahren nach einem beliebigen der Ansprüche 2 bis 6, wobei die erste vorgenehmigte Menge weiterhin auf der Basis der Füllung einer Ausgangswarteschlange im Ausgangsmodul, in welcher die von dem Eingangsmodul an das Ausgangsmodul vermittelten Datenpakete gespeichert sind, berechnet wird.

8. Verfahren nach den Ansprüchen 6 oder 7, wobei die erste vorgenehmigte Menge einen vorbestimmten Höchstwert aufweist, welcher derart berechnet wird, dass, wenn die Mehrzahl von Eingangsmodulen die Datenpakete zu einem im Wesentlichen selben Zeitpunkt an das Ausgangsmodul senden, kein Überlaufen der Ausgangswarteschlange in dem Ausgangsmodul erfolgt.

9. Verfahren nach einem der Ansprüche 2 bis 8, wobei der Schritt des Berechnens der ersten vorgenehmigten Menge durchgeführt wird, wenn die empfangenen ersten Datenpakete ein Feld enthalten, welches eine niedrige Latenzzeitanforderung angibt.

10. Verfahren nach einem der vorstehenden Ansprüche, wobei mindestens ein Teil der empfangenen Datenpakete in Zellen mit einem vorbestimmten Wert aufgeteilt wird, wobei die Zellen in der Eingangswarteschlange gespeichert werden, wobei die Werte der angeforderten Mengen die Anzahl der von dem Eingangsmodul an das Ausgangsmodul zu vermittelnden Zellen angeben, und der Wert der ersten genehmigten Menge die Anzahl der für die Vermittlung von dem Eingangsmodul an das Ausgangsmodul genehmigten Zellen angibt.

11. Paketvermittlungseinrichtung, umfassend:
- Eine erste Anzahl von Eingangsmodulen (IM1, IM2, IM3) zum Empfangen von Datenpaketen aus einer Mehrzahl von Eingangsströmen (if1, if2, if3), wobei jedes Eingangsmodul mindestens eine Eingangswarteschlange (QIN1, QIN2, QIN3) zum Speichern der empfangenen Datenpakete umfasst;
- eine zweite Anzahl von Ausgangsmodulen (OM1, OM2, OM3) zum Übertragen von Datenpaketen an eine Mehrzahl von Ausgangsströmen (of1, of2, of3);
- eine Schaltmatrix (MX), welche an die Eingangsmodule und an die Ausgangsmodule angeschlossen ist, um die empfangenen Datenpakete von den Eingangsmodulen an die entsprechenden Ausgangsmodule zu vermitteln;
- mindestens einen Eingangs-Controller (IC1, IC2, IC3) zum Steuern der Vermittlung von auf mindestens einem der Eingangsmodule empfangenen Datenpakete an die entsprechenden Ausgangsmodule, wobei der Eingangs-Controller dazu ausgelegt ist, nach dem Empfang von ersten Datenpaketen (P1) an dem Eingangsmodul, auf der Basis des Zustands der Eingangswarteschlange, in welcher zumindest ein Teil der empfangenen ersten Datenpakete gespeichert ist, eine erste Menge der ersten Datenpakete zu berechnen und die Vermittlung der ersten Menge von Datenpaketen von dem Eingangsmodul an das Ausgangsmodul anzufordern;
**dadurch gekennzeichnet, dass**
der Eingangs-Controller weiterhin dazu ausgelegt ist, vor dem Empfang einer Gewährung für die gesamte oder einen Teil der ersten angeforderten Menge von ersten zu vermittelnden Datenpaketen und nach Empfang von zweiten Datenpaketen an dem Eingangsmodul, auf der Basis der ersten angeforderten Menge und des Zustands der Eingangswarteschlange, in welcher jetzt zumindest ein Teil der empfangenen ersten Datenpakete und zumindest ein Teil der empfangenen zweiten Datenpakete gespeichert sind, eine zweite Menge der zweiten Datenpakete zu berechnen und die Vermittlung der zweiten Menge von Datenpaketen von dem Eingangsmodul an das Ausgangsmodul anzufordern.

12. Paketvermittlungseinheit nach Anspruch 11, wobei der Eingangs-Controller weiterhin dafür ausgelegt ist, vor der Anforderung der ersten Menge von Datenpaketen auf der Basis des Zustands der Eingangswarteschlange, in welcher zumindest ein Teil der empfangenen ersten Datenpakete gespeichert ist, eine erste vorgenehmigte Menge für zumindest einen Teil der von dem Eingangsmodul an das Ausgangsmodul zu vermittelnden ersten Datenpakete zu berechnen, wobei das Eingangsmodul weiterhin dafür ausgelegt ist, die in der Eingangswarteschlange gespeicherten Datenpakete gemäß dem Wert der ersten vorgenehmigten Menge über die Schaltmatrix an das Ausgangsmodul zu vermitteln.

13. Paketvermittlungseinheit nach den Ansprüchen 11 oder 12, wobei das Eingangsmodul weiterhin Speichermittel (M1) zum Speichern der ersten angeforderten Menge, der zweiten angeforderten Menge und der ersten vorgenehmigten Menge umfasst.

14. Netzwerkelement mit einer Paketvermittlungseinheit nach einem beliebigen der Ansprüche 11 bis 13.

15. Computerprogramm mit Computerprogrammcode-Mitteln, welche dazu ausgelegt sind, alle Schritte des Verfahrens nach einem beliebigen der Ansprüche 1 bis 10 auszuführen, wenn das Programm auf der Hardware eines Netzwerkelementes läuft.

## Revendications

1. Procédé de contrôle de la commutation de paquets de données dans un élément de réseau, le procédé comprenant les étapes suivantes :
- la réception (t1) de premiers paquets de données (P1) sur un module d'entrée et le stockage d'au moins une partie des premiers paquets de données reçus dans une file d'attente d'entrée (QIN1) du module d'entrée ;
- le calcul, à partir du statut de la file d'attente d'entrée, d'une première quantité des premiers paquets de données et la requête (t2) de commutation de la première quantité de paquets de données du module d'entrée au module de sortie ;
- l'accord (t8) d'une première quantité autorisée qui est tout ou une partie de la première quantité demandée de paquets de données à commuter ;
**caractérisé par** les étapes suivantes, avant l'étape d'accord :
- la réception (t4) de deuxièmes paquets de données (P2) sur le module d'entrée et le stockage d'au moins une partie des deuxièmes paquets de données reçus dans la file d'attente d'entrée ;
- le calcul, à partir de la valeur de la première quantité demandée et du statut de la file d'attente d'entrée, d'une deuxième quantité des deuxièmes paquets de données et la demande (t5) de commutation des deuxièmes paquets de données du module d'entrée au module de sortie.

2. Procédé selon la revendication 1, le procédé comprenant en outre, avant l'étape de demande de la première quantité, les étapes suivantes :
- le calcul, à partir du statut de la file d'attente d'entrée, d'une première quantité pré-autorisée pour au moins une partie des premiers paquets de données stockés à commuter du module d'entrée au module de sortie ;
- la commutation, du module d'entrée au module de sortie via une matrice de commutation, des paquets de données stockés dans la file d'attente d'entrée en fonction de la valeur de la première quantité pré-autorisée.

3. Procédé selon les revendications 1 ou 2, dans lequel la première quantité autorisée est l'accord pour une partie de la première quantité demandée, le procédé comprenant en outre les étapes suivantes :
- le calcul, à partir de la valeur de la première quantité autorisée et de la valeur de la première quantité demandée, d'une première quantité résiduelle des premiers paquets de données et la demande de commutation de la première quantité résiduelle de premiers paquets de données du module d'entrée au module de sortie ;
- la commutation, du module d'entrée au module de sortie via la matrice de commutation, des paquets de données stockés dans la file d'attente d'entrée en fonction de la valeur de la première quantité autorisée.

4. Procédé selon la revendication 3, comprenant en outre les étapes suivantes :
- la réception (t9) de troisièmes paquets de données (P3) sur le module d'entrée et le stockage d'au moins une partie des troisièmes paquets de données reçus dans la file d'attente d'entrée ;
- le calcul, à partir de la valeur de la première quantité résiduelle, de la valeur de la deuxième quantité demandée et du statut de la file d'attente d'entrée, d'une troisième quantité des troisièmes paquets de données et d'une partie des premiers paquets de données et la demande (t10) de commutation de la troisième quantité de paquets de données du module d'entrée au module de sortie.

5. Procédé selon l'une quelconque des revendications précédentes, comprenant en outre les étapes de stockage dans le module d'entrée de la première quantité demandée, de la deuxième quantité demandée, de la première quantité pré-autorisée, de la première quantité résiduelle et de la troisième quantité demandée.

6. Procédé selon l'une quelconque des revendications 2 à 5, dans lequel la première quantité pré-autorisée est en outre calculée à partir du nombre d'une pluralité de files d'attente d'entrée stockant des paquets de données à commuter sur le module de sortie.

7. Procédé selon l'une quelconque des revendications 2 à 6, dans lequel la première quantité pré-autorisée est en outre calculée à partir du remplissage d'une file d'attente de sortie dans le module de sortie stockant les paquets de données commutés du module d'entrée au module de sortie.

8. Procédé selon les revendications 6 ou 7, dans lequel la première quantité pré-autorisée a une valeur maximale prédéfinie telle que, au cas où la pluralité de modules d'entrée envoient les paquets de données au module de sortie sensiblement en même temps, aucun débordement de la file d'attente de sortie du module de sortie ne se produit.

9. Procédé selon l'une quelconque des revendications 2 à 8, dans lequel l'étape de calcul de la première quantité pré-autorisée est effectué au cas où les premiers paquets de données reçus comprennent un champ indiquant une exigence de faible temps d'attente.

10. Procédé selon l'une quelconque des revendications précédentes, dans lequel au moins une partie des paquets de données reçus sont divisés en cellules ayant une valeur prédéfinie, les cellules sont stockées dans la file d'attente d'entrée, les valeurs des quantités demandées indiquent le nombre de cellules à commuter du module d'entrée au module de sortie et la valeur de la première quantité autorisée indique le nombre de cellules autorisées à commuter du module d'entrée au module de sortie.

11. Commutateur de paquets, comprenant :
- un premier nombre de modules d'entrée (IM1, IM2, IM3) pour recevoir des paquets de données en provenance d'une pluralité de flux d'entrée (if1, if2, if3), chaque module d'entrée comprenant au moins une file d'attente d'entrée (QIN1, QIN2, QIN3) pour stocker les paquets de données reçus ;
- un deuxième nombre de modules de sortie (OM1, OM2, OM3) pour transmettre les paquets de données à une pluralité de flux de sortie (of1, of2, of3) ;
- une matrice de commutation (MX) connectée aux modules d'entrée et aux modules de sortie pour commuter les paquets de données reçus des modules d'entrée aux modules de sortie correspondants ;
- au moins un contrôleur d'entrée (IC1, IC2, IC3) pour contrôler la commutation des paquets de données reçus sur au moins l'un des modules d'entrée sur les modules de sortie correspondants, dans lequel le contrôleur d'entrée est adapté pour calculer, après réception des premiers paquets de données (P1) sur le module d'entrée, à partir du statut de la file d'attente d'entrée stockant au moins une partie des premiers paquets de données reçus, une première quantité des premiers paquets d'entrée et pour demander la commutation de la première quantité de paquets de données du module d'entrée au module de sortie ;
**caractérisé en ce que**
le contrôleur d'entrée est en outre adapté pour calculer, avant la réception d'un accord pour tout ou partie de la première quantité demandée de premiers paquets de données à commuter et après la réception de deuxièmes paquets de données sur le module d'entrée, à partir de la valeur de la première quantité demandée et du statut de la file d'attente d'entrée stockant maintenant au moins une partie des premiers paquets de données reçus et au moins une partie des deuxièmes paquets de données reçus, une deuxième quantité des deuxièmes paquets de données et pour demander la commutation de la deuxième quantité de paquets de données du module d'entrée au module de sortie.

12. Commutateur de paquets selon la revendication 11, dans lequel le contrôleur d'entrée est en outre adapté pour calculer, avant la demande de la première quantité de paquets de données, à partir du statut de la file d'attente d'entrée stockant au moins une partie des premiers paquets de données reçus, une première quantité pré-autorisée pour au moins une partie des premiers paquets de données à commuter du module d'entrée au module de sortie, dans lequel le module d'entrée est en outre adapté pour commuter sur le module de sortie via la matrice de commutation les paquets de données stockés dans la file d'attente d'entrée selon la valeur de la première quantité pré-autorisée.

13. Commutateur de paquets selon les revendications 11 ou 12, dans lequel le module d'entrée comprend en outre un moyen de mémoire (M1) pour stocker la première quantité demandée, la deuxième quantité demandée et la première quantité pré-autorisée.

14. Élément de réseau comprenant un commutateur de paquets selon l'une quelconque des revendications 11 à 13.

15. Programme informatique comprenant des moyens de programmation informatiques adapté pour exécuter toutes les étapes du procédé selon l'une quelconque des revendications 1 à 10 quand le programme est exécuté sur le matériel d'un élément de réseau.
